# EUROPEAN PATENT SPECIFICATION

(11) **EP 2 868 488 B1**
(45) Date of publication and mention of the grant of the patent: **17.02.2016**
(21) Application number: 14180946.7
(22) Date of filing: 14.08.2014
(51) Int. Cl.: B44C 1/17, B32B 7/12, A63B 49/02, B32B 15/08, B32B 15/082, B32B 15/09, B32B 15/092, B32B 15/095, B32B 27/08, B32B 27/30, B32B 27/36, B32B 27/38, B32B 27/40, B32B 3/02, B32B 3/08, B29C 67/00, B44C 1/14, B44C 3/02

(54) **Method of forming metallic appearance of sports equipment**
Verfahren zur Erzeugung von metallischem Aussehen von Sportgeräten
Procédé de formation d'aspect métallique d'équipement sportif

(30) Priority: 30.08.2013 JP 2013179295
(43) Date of publication of application: 06.05.2015
(73) Proprietor: Globeride, Inc., Tokyo 203-8511 (JP)
(72) Inventor: Nishikawa, Futoshi, Tokyo, 203-8511 (JP)
(74) Representative: Boult Wade Tennant

(56) References cited:
- US-A1- 2005 052 516
- US-A1- 2007 079 928
- US-A1- 2007 184 207
- US-A1- 2012 196 095
- DATABASE WPI Week 201344 Thomson Scientific, London, GB; AN 2013-L39452 XP002737020, & JP 2013 126399 A (DAIWA SEIKO KK) 27 June 2013 (2013-06-27) & JP 2013 126399 A (GLOBERIDE INC) 27 June 2013 (2013-06-27)

## Description

### TECHNICAL FIELD

The present invention relates to a sports equipment (e.g., fishing gears including fishing poles, golf clubs, and rackets) with a base member having printed thereon characters and/or decorative patterns by ink-jet printing using an ultraviolet (UV) curable resin (e.g., an UV ink), which cures upon irradiation with UV rays. In particular, the present invention relates to a method of forming a three-dimensional metallic appearance using an UV curable resin.

### BACKGROUND

Conventionally, it has been widely adopted to ink-jet print decorations and the like on the surface of a base member. Ink for ink-jet printing used for such applications is categorized mainly into aqueous, oil-based, solvent-based and UV-curable ink. Especially, UV-curable ink has been employed in various fields because its solventless and quick-drying, and endurable natures enable printing on various materials such as glass, lumber, metal, plastic, and the like (e.g., see Patent Literature 1.)

In a decoration using such ink, it has been performed to improve aesthetics and the like by forming three-dimensional and metallic appearance (see, e.g., Patent Literature 2 below). In such a case, for example, metallic ink including metal flake pigment is used with various resins (e.g., adhesive primer and the like) as the binders therefor. UV-curable metallic ink including metal flake pigment is also known (e.g., see Patent Literature 3 below).

### RELEVANT REFERENCES

### LIST OF RELEVANT PATENT LITERATURE

Patent Literature 1: Japanese Patent Application Publication No. 2013-126399 discloses relief structures in combination with ink-jet printing.

Patent Literature 2: Japanese Patent Application Publication No. 2009-297631 discloses a coating method of metallic lusterless design coating metal plate for interior portion of building, which involves cured coating films on chemical conversion-surface treated metal plate.

Patent Literature 3: Japanese Patent Application Publication No. 2005-272568 discloses a metallic pigment composition used for ultraviolet metallic ink composition and contains preset amount of metal flakes and cellulose nitrate.

### SUMMARY

Several issues arise in the case of achieving three-dimensional and metallic appearance by ink-jet printing with UV-curable metallic ink as follows:

UV-curable ink has a property of significant viscosity change according to temperature. When the viscosity is low, ink-jet nozzles suitable for ejecting such UV-curable ink may possibly be clogged with metallic powder having a large grain diameter and dispersedly included in the ink.

In UV-curable metallic ink, it is one of the issues that metal flake pigment promotes initiation of polymerization of monomers or oligomers in UV-curable resin and, as such, short-term gelation occurs when the ink is in storage. Further, metallic shine of ink film of printed material using such ink tends to be lost by oxidization of the metal flake as time advances.

To solve these issues in the case of forming three-dimensional and metallic appearance using UV-curable metallic ink including metal flake pigment, it takes a lot of effort and great cost and it is difficult to sufficiently achieve a three-dimensional metallic appearance.

It is also possible to form a three-dimensional metallic appearance without use of the UV-curable metallic ink at a relatively low cost, by forming an adhesive resin layer to a desired thickness by ink-jet printing and coating the viscous resin layer with a metallic foil or a metallic sheet. However, since the thickness of a resin layer applied thorough an ink-jet nozzle is limited, the resultant three-dimensional appearance is poor. Variation of the thickness of the resin layer applied for three-dimensional appearance may cause uneven adhesiveness between thin portions and thick portions; and thus the metallic layer cannot be formed stably.

The present invention is intended to overcome the above issues and one of the objects hereof is to provide a method of stably forming a three-dimensional metallic appearance of a sports equipment at low cost by ink-jet printing with an ultraviolet-curable resin.

To the above end, the present invention provides a method of forming, on a base member of a sports equipment, a metallic appearance including a three-dimensional decorative layer containing a metallic material, the method including the steps of: forming a plurality of UV curable adhesive layers on the base member by ink-jet printing such that part of underlying adhesive layer is exposed; and forming a metallic material layer on the surface of the plurality of adhesive layers.

In the above arrangement, a plurality of UV curable adhesive layers are formed on the base member by ink-jet printing such that part of the underlying adhesive layer is exposed. Thus, the entirety of the adhesive layers has a large thickness. Further, a metallic material layer is formed thereon, making the metallic material layer appear deeper. Since a plurality of adhesive layers are formed such that part of the underlying adhesive layer is exposed, the metallic material layer formed thereon lies on the surfaces of the adhesive layers to achieve a three-dimensional metallic appearance. In particular, an increased number of adhesive layers highlight the metallic three-dimensional part to enhance the appearance. In this case, the adhesive layer is formed by ink-jet printing to a desired thickness depending on the arrangement of the pattern constituting the decorative layer, thereby highlighting the unevenness in the metallic pattern.

The above configuration reduces the cost of producing a three-dimensional metallic appearance because, instead of using an UV-curable metallic ink, an UV-curable resin is formed into adhesive layers by ink-jet printing and a metallic material layer is formed thereon.

In the above step of forming adhesive layers, it is preferable that the amount of ultraviolet rays applied to an underlying layer should be smaller than the amount of ultraviolet rays applied to the adhesive layer formed thereon.

In the case of forming a plurality of UV-curable adhesive layers by ink-jet printing, an underlying adhesive layer cures earlier than the adhesive layer formed thereon due to longer time passage (the exposed region of the underlying adhesive layer is in a different curing state and thus has a different adhesiveness than the exposed region of the adhesive layer formed thereon). Therefore, applying a smaller amount of ultraviolet rays to the underlying adhesive layer than to the adhesive layer formed thereon slows the curing to uniform the curing state between the underlying adhesive layer and the adhesive layer formed thereon. This operation stabilizes the adhesion of the metallic material layer formed thereon.

In addition to or in place of the adjustment of the amount of applied ultraviolet rays, the amount of resin ejected to form an underlying adhesive layer may be greater than the amount of resin ejected to form the adhesive layer formed thereon. This configuration also slows the curing of the underlying adhesive layer to uniform the curing state with the adhesive layer formed thereon.

The present invention allows providing various sports equipments with a decorative layer by the method of forming a metallic appearance as described above thereby to achieve a three-dimensional metallic appearance at low cost.

The present invention allows stably forming a three-dimensional metallic appearance at low cost by ink-jet printing using an UV-curable resin.

### BRIEF DESCRIPTION OF THE DRAWINGS

Fig. 1 schematically illustrates a lateral view of a pseudo bait for fishing (lure) having a decorative layer on the surface of a base member, which is one example of a sports equipment of the present invention.
Fig. 2 schematically illustrates a lateral view of a part of a fishing rod having a decorative layer on the surface of a base member, which is one example of a sports equipment of the present invention.
Fig. 3 schematically illustrates plan view of a tennis racket having a decorative layer on the surface of a base member, which is one example of a sports equipment of the present invention.
Fig. 4 illustrates a first embodiment of a decorative layer formed on a base member of a sports equipment and a method of forming the decorative layer.
Fig. 5 illustrates the laminated structure of the adhesive layers illustrated in Fig. 4 having formed thereon a metallic material layer.
Fig. 6 illustrates a second embodiment of a decorative layer formed on a base member of a sports equipment and a method of forming the decorative layer.
Fig. 7 illustrates the laminated structure of the adhesive layers illustrated in Fig. 6 having formed thereon a metallic material layer.

### DESCRIPTION OF EXAMPLE EMBODIMENTS

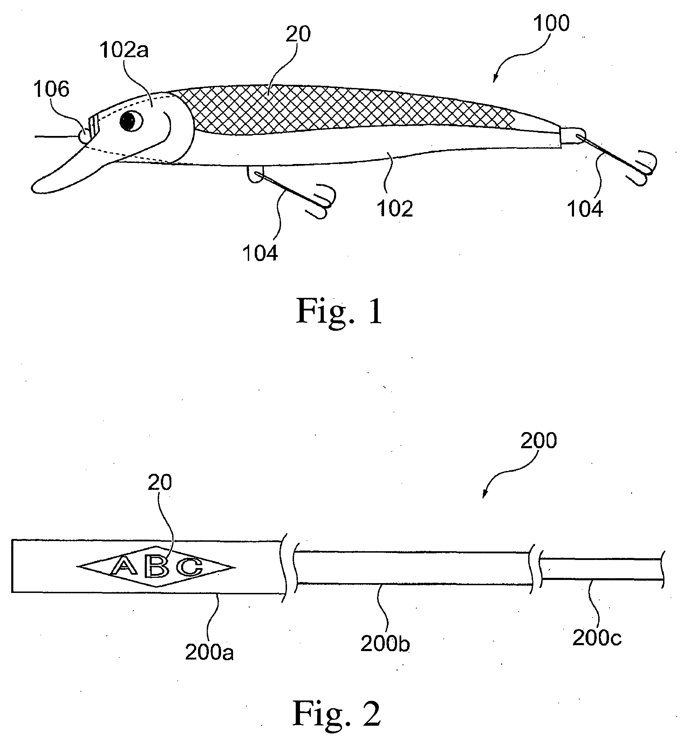

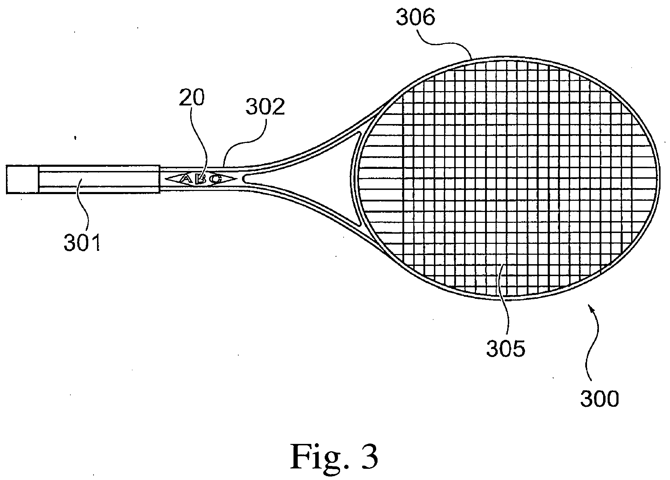

Embodiments of a sports equipment according to the invention are explained by reference to drawings as follows. Figs. 1, 2 and 3 show examples of sports equipment according to the present invention: Fig. 1 schematically illustrates a lateral view of a pseudo bait for fishing (lure) having a decorative layer on the surface of a base member. Fig. 2 schematically illustrates a lateral view of a part of a fishing rod having a decorative layer on the surface of a base member. Fig. 3 schematically illustrates a tennis racket having a decorative layer on the surface of a base member.

A lure 100 shown in Fig. 1 may have a lure body 102, a fishing line connection unit 106 which is provided in a head unit 102a of the lure body 10, and fishing hooks 104 which depends from an abdominal part and a tail part of the lure body 102 wherein a decorative layer 20 decorated with scaled patterns is provided on a back of the lure body 102. The decorative layer 20 may be constituted by characters, lines, patterns (including colored patterns), or combinations thereof, and correspond to a three-dimensional part having metallic colors. Thus, an area where the decorative layer is formed may include a three-dimensional part having metallic colors, and the three-dimensional part having metallic colors may include an ordinarily colored part which is, e.g., color-printed by ink-jet printing.

A fishing rod 200 shown in Fig. 2 may be, for example, telescopic one, comprising a base rod 200a, a plurality of rods 200b, 200c,... being capable of telescoping within a base rod 200a. A base rod 200a may be, for example, provided with a decorative layer 20 including characters and patterns.

A tennis racket 300 shown in Fig.3 has a shaft 302 provided with a grip 301 winded by a tape, etc. and a frame 306 extending from a tip of the shaft 302 and strung with a net (a gut) 305, wherein the shaft 302 is provided with the decorative layer 20 including characters and patterns.

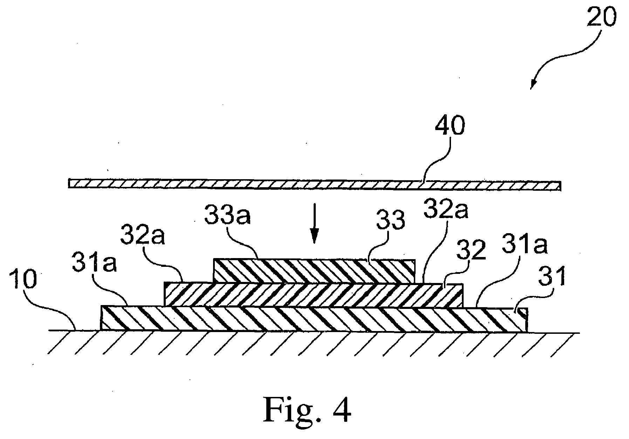

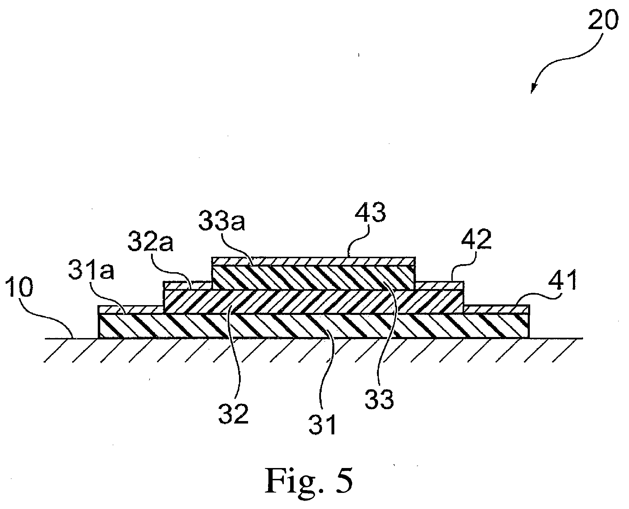

The above decorative layer is formed as illustrated in Figs. 4 and 5. Fig. 4 illustrates a first embodiment of the decorative layer and a method of forming the decorative layer; and Fig. 5 illustrates a laminated structure of adhesive layers illustrated in Fig. 4 having formed thereon a metallic material layer.

As shown in the figure, the decorative layer 20 of the embodiment is provided on the surface of a base member 10 (e.g., a base member of the lure body 102 of the lure 100 in Fig.1, a base member of the base rod 200a of the fishing rod 200 in Fig.2, a base member of the shaft 302 of the tennis racket 300, etc.) three-dimensionally in a laminated state.

The base member 10 may be formed of a synthetic resin such as polypropylene (PP), polyethylene terephthalate (PET), polycarbonate (PC), or acrylic resin (e.g., polymethylmethacrylate resin (PMMA)). Besides synthetic resins, the base member 10 may be formed of a composite material such as a fiber-reinforced resin (FRP) made of a synthetic resin mixed with various fiber materials as a reinforcing agent, or a metal such as stainless steel, aluminum, or brass. Also, the base member 10 may be formed of Inorganic materials such as ceramics, earthen wares, and glass.

The decorative layer 20 includes a plurality of stacked adhesive layers formed of an UV-curable resin by ink-jet printing The embodiment may include three such adhesive layers (in the figure, the reference numerals 31, 32, and 33 indicate the stacked adhesive layers). Each of the adhesive layers 31, 32, and 33 may be formed such that the underlying layer is partially exposed.

Each of the adhesive layers 31, 32, and 33 may be either an uncolored transparent layer or a colored transparent layer. The UV-curable resin constituting the adhesive layers 31, 32, and 33 may be an adhesive resin that cures through polymerization reaction caused by application of ultraviolet rays. More specifically, the UV resin may be composed mainly of a photopolymeric oligomer or monomer (epoxy acrylate, urethane acrylate, polyester acrylate, etc.) and include a catalyst as a photopolymeric initiator, as well as a pigment and an adjuvant such as an antifoam agent. In the UV resin, the photopolymeric initiator may produce radicals upon irradiation with ultraviolet rays, and the radicals may initiate polymerization of the oligomer. Such polymerization reaction causes the UV resin to cure and settle on the printing medium. Among various photopolymeric initiators, generally used are benzophenone-based, benzoin-based, acetophenone-based, thioxanthone-based, acyl phosphine oxide-based, etc.

In the embodiment, the steps of stacking the adhesive layers 31, 32, and 33 made of an UV-curable resin may be performed by ink-jet printing, wherein the adhesive layers may be sequentially printed on the base member 10 such that each underlying adhesive layer is partially exposed (the exposed parts of the underlying adhesive layers are denoted by 31 a and 32a). An ink-jet printer (not shown) performing ink-jet printing has a recording head having a plurality of ejection nozzles and being reciprocal in scanning direction by a carriage, and a light source for UV-curing which is installed in the carriage. The light source is to apply ultraviolet rays and may be an LED, for example. An LED may suppress heat generation and save energy. Naturally, the light source may also be a metal halide lamp, a high pressure mercury lamp, or the like, in addition to an LED.

In the printing operation using such an ink-jet printer, an UV-curable resin may be ejected from the ejection nozzles for forming the adhesive layers 31, 32, and 33. In this case, if the printer is controlled to eject larger amount of UV-curable resin, the density of the resin adhered in dots is varied, and the thicknesses of the adhesive layers may be also varied accordingly. In the embodiment, the adhesive layers 31, 32, and 33 may be adjusted to generally the same thickness.

On the surfaces of the adhesive layers 31, 32, and 33 stacked as described above may be formed metallic material layers 41, 42, and 43 as illustrated in Fig. 5 in the steps of forming the metallic material layers. More specifically, the metallic material layers 41, 42, and 43 may be respectively formed on the adhesive layers 31, 32, and 33 of the UV-curable resin by, e.g., affixing and pressing a metallic foil film 40 shown in Fig. 4 onto the adhesive layers 31, 32, and 33 and then removing the metallic foil film 40. Thus, the metallic foil film 40 may be adhered onto the exposed regions 31 a of the first adhesive layer 31, the exposed regions 32a of the second adhesive layer 32, and the surface 33a of the third adhesive layer 33 to form three-dimensional metallic material layers in accordance with the levels of the stacked adhesive layers.

The metallic material constituting the metallic material layers 41, 42, and 43 may be, e.g., gold, silver, copper, platinum, aluminum, tin, brass, or deposited film, and may preferably be a bright material. Another method of forming metallic material layers on the adhesive layers 31, 32, and 33 may be, e.g., to blow metallic flakes onto the stacked adhesive layers. The method of forming the metallic material layers is not particularly limited.

In the above arrangement, a plurality of UV curable adhesive layers may be formed on the base member 10 by ink-jet printing such that part of the underlying adhesive layer is exposed. Thus, the entirety of the adhesive layers has a large thickness. Thus, the metallic material layers formed thereon may appear deeper. In the arrangement shown in Figs. 4 and 5, three adhesive layers each having a thickness of, e.g., about 0.02 mm have a total thickness of 0.06 mm, which allows a metallic pattern appear deeper as compared to the thickness of a single adhesive layer. In particular, an increased number of adhesive layers may highlight the metallic three-dimensional part to enhance the appearance.

The stacked adhesive layers may be formed by ink-jet printing to a desired thickness depending on the arrangement of the pattern, thereby highlighting the unevenness in the metallic pattern like fish scales at particular positions. Freedom from UV-curable metallic ink reduces the cost of forming the three-dimensional metallic appearance.

In the steps of forming the above laminated structure of the adhesive layers, it is preferable that the amount of ultraviolet rays applied to an underlying layer should be smaller than the amount of ultraviolet rays applied to the adhesive layer formed thereon.

This is because the curing time of the adhesive layers depends on the amount of applied ultraviolet rays; that is, when the amount is smaller, the curing time is longer. As a result, an adhesive layer may be provided with adhesiveness generally the same as that of the adhesive layer to be formed thereon. That is, in the case of forming a plurality of UV-curable adhesive layers by ink-jet printing, the underlying adhesive layer 31 (closer to the base member 10) may cure earlier than the adhesive layer 32 formed thereon due to time passage before the adhesive layer 32 is formed (the exposed region 31 a of the underlying adhesive layer may be in a different curing state and thus has a different adhesiveness than the exposed region 32a of the adhesive layer formed thereon). Therefore, applying a smaller amount of ultraviolet rays to the underlying adhesive layer 31 than to the adhesive layer 32 formed thereon may slow the curing to uniform the curing state between the underlying adhesive layer and the adhesive layer formed thereon. This operation may stabilize the adhesion of the metallic material layers 41 and 42 formed on the adhesive layers.

In the embodiments shown in Figs. 4 and 5, both having three adhesive layers, the amount of applied ultraviolet rays should be increased stepwise with the level of the layers. For example, the amount of ultraviolet rays applied to the first adhesive layer 31 may be 5 to 20% of the maximum amount of the applied ultraviolet rays; the amount of ultraviolet rays applied to the second adhesive layer 32 may be 20 to 30% of the maximum amount of the applied ultraviolet rays; and the amount of ultraviolet rays applied to the third adhesive layer 33 may be 30 to 40% of the maximum amount of the applied ultraviolet rays.

If three or more adhesive layers are stacked, it is preferable to apply a smaller amount of ultraviolet rays to an adhesive layer at a lower level (closer to the base member) as described above so as to form a pattern in an uniformed relief. This condition may not necessarily be satisfied between adjacent layers depending on the pattern to be formed. This is because the curing rate varies for the layers depending on the size (area) of the adhesive layers and the amount of ejected resin (thickness). Therefore, in forming the adhesive layers, it is only required that the amount of ultraviolet rays applied to any one adhesive layer closer to the base member should be smaller than the amount of ultraviolet rays applied to any one adhesive layer closer to the surface of the decorative layer.

In the decorative layer formed on the base member 10 as described above, a colored pattern (a pattern layer) may be formed on the exposed metallic material layers 41, 42, and 43 by ink-jet printing. Such a colored pattern may be formed either on the entirety of any of the metallic material layers or on a part of any of the metallic material layers. In this case, the colored pattern may be formed of a monochrome or polychrome color ink, which readily provides a three-dimensional pattern including both metallic colors and ordinary colors. The decorative layer 20 may be coated with an uncolored transparent layer or a colored transparent layer (protective layer) on the outermost layer. These transparent layers may be formed of either paints including a solvent (solvent-based inks) or UV inks including a UV curable resin.

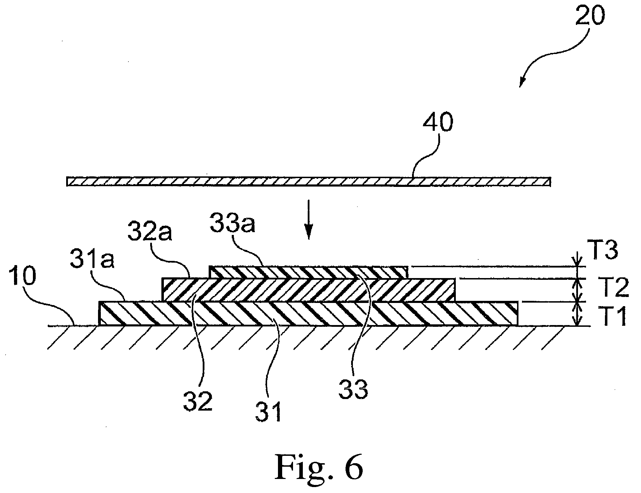

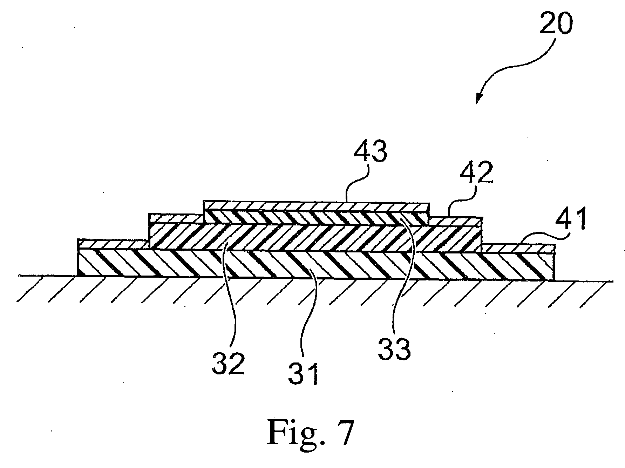

Figs. 6 and 7 illustrate a second embodiment of the decorative layer formed on the base member of a sports equipment. Fig. 6 illustrates the method of forming the decorative layer; and Fig. 7 illustrates the laminated structure of the adhesive layers illustrated in Fig. 6 having formed thereon a metallic material layer.

In the embodiment described above, the amount of applied ultraviolet rays is smaller on the base member side than on the surface side such that the layers have even adhesiveness. In the present embodiment, the amount of resin ejected for printing is larger for the lower layers (on the base member side).

Adjusting the amount of ejected resin with the level of the adhesive layers allows adjusting the thicknesses of the adhesive layers and adjusting the curing state of the adhesive layers to generally uniform the adhesiveness. That is, when the adhesive layer 31 formed at lower level (on the base member side) has a larger thickness (formed of a larger amount of ejected resin), the curing time thereof is longer. Thus, the curing state of the adhesive layer 31 is close to that of the adhesive layer 32 formed thereon, achieving generally the same adhesiveness in the exposed region 31 a of the underlying adhesive layer and in the exposed region 32a of the adhesive layer formed thereon. This operation may stabilize the adhesion of the metallic material layers 41 and 42 formed on the adhesive layers.

In the embodiments shown in Figs. 6 and 7, both having three adhesive layers, the amount of ejected resin should be decreased stepwise with the level of the layers to form a smaller thickness (T3<T2<T1), thereby adjusting the curing time. For example, the amount of ejected resin for the first adhesive layer 31 may be 70 to 100% of the maximum amount of the ejected resin; the amount of ejected resin for the second adhesive layer 32 may be 40 to 70% of the maximum amount of the ejected resin; and the amount of ejected resin for the third adhesive layer 33 may be 10 to 40% of the maximum amount of the ejected resin.

If three or more adhesive layers are stacked as in the first embodiment described above, it is preferable to eject a smaller amount of resin for an adhesive layer at a lower level (closer to the base member) so as to form a pattern in an uniformed relief. This condition may not necessarily be satisfied between adjacent layers depending on the pattern to be formed. This is because the curing rate varies for the layers depending on the size (area) of the adhesive layers and the amount of applied ultraviolet rays. Therefore, in forming the adhesive layers, it is only required that the thickness of any one adhesive layer closer to the base member should be larger than the thickness of any one adhesive layer closer to the surface of the decorative layer.

In this embodiment, a colored pattern may be additionally formed on the exposed metallic material layers 41, 42, and 43 by ink-jet printing, and a protective layer may be formed thereon.

Embodiments of the present invention are not limited to the above descriptions and are susceptible to various modifications within the purport of the present invention. For example, the number of the adhesive layers in the decorative layer 20 described above may differ among the embodiments or may be the same among the embodiments. Also, the decorative layer 20 may be provided all over or partly on the base member 10. Further, another adhesive layer may be formed on each of the metallic material layers by ink-jet printing, and another metallic material layer having different colors may be formed thereon. Still further, the adhesive layers may be formed while adjusting the amount of applied ultraviolet rays and additionally adjusting the amount of ejected resin.

### LIST OF REFERENCE NUMBERS

- 10: base member
- 20: decorative layer
- 31, 32, 33: adhesive layers
- 40: metallic film
- 41, 42, 43: metallic material layers
- 100: lure (sport equipment)
- 200: fishing rod (sports equipment)
- 300: tennis racket (sports equipment)

## Claims

1. A method of forming a metallic appearance of a sports equipment wherein a decorative layer including a metallic material is formed three-dimensionally on a surface of a base member of the sports equipment, the method comprising the steps of:
forming the decorative layer including a plurality of ultraviolet-curable adhesive layers on the surface of the base member by ink-jet printing such that an underlying adhesive layer is partially exposed; and
forming metallic material layers on the surfaces of the plurality of adhesive layers.

2. The method of forming a metallic appearance of a sports equipment according to claim 1, wherein the plurality of ultraviolet-curable adhesive layers are formed such that an underlying adhesive layer is irradiated with a smaller amount of ultraviolet rays than an adhesive layer formed thereon.

3. The method of forming a metallic appearance of a sports equipment according to claim 2, wherein the plurality of adhesive layers comprise three or more adhesive layers, and an adhesive layer at a lower level is irradiated with a smaller amount of ultraviolet rays.

4. The method of forming a metallic appearance of a sports equipment according to claim 1, wherein the plurality of ultraviolet-curable adhesive layers are formed such that an underlying adhesive layer is formed of a larger amount of ejected resin than an adhesive layer formed thereon.

5. The method of forming a metallic appearance of a sports equipment according to claim 1, wherein the plurality of adhesive layers comprise three or more adhesive layers, and an adhesive layer at a lower level is formed of a larger amount of ejected resin.

6. A sports equipment comprising a decorative layer formed by the method of forming a metallic appearance according to claim 1.

7. The sports equipment according to claim 6 wherein a colored pattern is formed on the metallic material layers by ink-jet printing.

## Patentansprüche

1. Verfahren zum Ausbilden einer metallischen Optik an einem Sportartikel, bei dem eine Dekorschicht mit einem dreidimensional geformten metallischen Material an einer Oberfläche eines als Unterlage dienenden Elements des Sportartikels ausgebildet ist, wobei das Verfahren die folgenden Schritte umfasst:
Ausbilden der mehrere im Ultravioletten aushärtbare Klebstoffschichten aufweisenden Dekorschicht auf der Oberfläche des als Unterlage dienenden Elements mittels Tintenstrahldrucken so, dass eine tiefer liegende Klebstoffschicht teilweise freiliegt, und
Ausbilden von Schichten aus metallischem Material auf den Oberflächen der mehreren Klebstoffschichten.

2. Verfahren zum Ausbilden einer metallischen Optik an einem Sportartikel gemäß Anspruch 1, worin die mehreren im Ultravioletten aushärtbaren Klebstoffschichten so ausgebildet sind, dass eine tieferliegende Klebstoffschicht mit einer geringeren Dosis ultravioletter Strahlen bestrahlt wird als eine auf dieser ausgebildete Klebstoffschicht.

3. Verfahren zum Ausbilden einer metallischen Optik an einem Sportartikel gemäß Anspruch 2, worin die mehreren Klebstoffschichten drei oder mehr Klebstoffschichten umfassen und eine weiter unten liegende Klebstoffschicht mit einer geringeren Dosis ultravioletter Strahlen bestrahlt wird.

4. Verfahren zum Ausbilden einer metallischen Optik an einem Sportartikel gemäß Anspruch 1, worin die mehreren im Ultravioletten aushärtbaren Klebstoffschichten so ausgebildet sind, dass eine tieferliegende Klebstoffschicht aus einer größeren Menge ausgestoßenen Harzes gebildet ist als eine auf dieser ausgebildete Klebstoffschicht.

5. Verfahren zum Ausbilden einer metallischen Optik an einem Sportartikel gemäß Anspruch 1, worin die mehreren Klebstoffschichten drei oder mehr Klebstoffschichten umfassen und eine tieferliegende Klebstoffschicht aus einer größeren Menge ausgestoßenen Harzes gebildet ist.

6. Sportartikel mit einer Dekorschicht, die nach einem Verfahren zum Ausbilden einer metallischen Optik gemäß Anspruch 1 gebildet wurde.

7. Sportartikel nach Anspruch 6, worin auf die Schichten aus metallischem Material mittels Tintenstrahldruck ein Farbmuster aufgebracht ist.

## Revendications

1. Procédé pour former un aspect métallique sur un équipement de sport, dans lequel une couche décorative comprenant un matériau métallique est formée de manière tridimensionnelle sur une surface d'un élément de base de l'équipement de sport, le procédé comprenant les étapes consistant à :
former la couche décorative incluant une pluralité de couches adhésives durcissables par ultraviolets sur la surface de l'élément de base par impression à jet d'encre, de telle sorte qu'une couche adhésive sous-jacente est partiellement exposée ; et
former des couches de matériau métallique sur les surfaces de la pluralité de couches adhésives.

2. Procédé pour former un aspect métallique sur un équipement de sport selon la revendication 1, dans lequel la pluralité de couches adhésives durcissables par ultraviolets sont formées de telle sorte qu'une couche adhésive sous-jacente est irradiée par une quantité plus faible de rayons ultraviolets qu'une couche adhésive formée sur celle-ci.

3. Procédé pour former un aspect métallique sur un équipement de sport selon la revendication 2, dans lequel la pluralité de couches adhésives comprend trois couches adhésives ou plus, et une couche adhésive à un niveau inférieur est irradié par une quantité plus faible de rayons ultraviolets.

4. Procédé pour former un aspect métallique sur un équipement de sport selon la revendication 1, dans lequel la pluralité de couches adhésives durcissables par ultraviolets est formée de telle sorte qu'une couche adhésive sous-jacente est formée par une plus grande quantité de résine éjectée qu'une couche adhésive formée sur celle-ci.

5. Procédé pour former un aspect métallique sur un équipement de sport selon la revendication 1, dans lequel la pluralité de couches adhésives comprend trois couches adhésives ou plus, et une couche adhésive à un niveau inférieur est formée par une plus grande quantité de résine éjectée.

6. Équipement de sport comprenant une couche décorative formée par l'intermédiaire du procédé pour former une finition métallique selon la revendication 1.

7. Équipement de sport selon la revendication 6, dans lequel un motif coloré est formé sur les couches de matériau métallique par impression à jet d'encre.
